(19) Europäisches Patentamt

European Patent Office

Office européen des brevets

(11) **EP 1 710 998 B1**

(12) **EUROPEAN PATENT SPECIFICATION**

(45) Date of publication and mention of the grant of the patent:
**15.07.2009 Bulletin 2009/29**

(51) Int Cl.:
***H04N 1/409*** *(2006.01)*

(21) Application number: **06112305.5**

(22) Date of filing: **06.04.2006**

(54) **Edge detection for dispersed-dot binary halftone images**

Kantendetektion für ein binäres aus Streupunkten bestehenden Halbtonbild

Détection de contours pour une image binaire demi-ton se composant de points dispersés

(84) Designated Contracting States:
**DE FR GB**

(30) Priority: **06.04.2005 US 100870**

(43) Date of publication of application:
**11.10.2006 Bulletin 2006/41**

(73) Proprietor: **Xerox Corporation**
**Rochester,**
**New York 14644 (US)**

(72) Inventor: **He, Zhen**
**Sherwood, OR- 97140 (US)**

(74) Representative: **Grünecker, Kinkeldey,**
**Stockmair & Schwanhäusser**
**Anwaltssozietät**
**Leopoldstrasse 4**
**80802 München (DE)**

(56) References cited:

| | |
|---|---|
| EP-A- 0 385 009 | EP-A1- 0 467 684 |
| EP-A1- 0 632 642 | EP-A2- 0 771 102 |
| WO-A-01/07893 | WO-A-97/44950 |
| JP-A- 8 032 796 | US-B1- 6 671 068 |

• HAN W-Y ET AL: "Edge detection and edge-preserved compression for error-diffused images" COMPUTERS AND GRAPHICS, PERGAMON PRESS LTD. OXFORD, GB, vol. 21, no. 6, 12 November 1997 (1997-11-12), pages 757-767, XP004106906 ISSN: 0097-8493

**Description**

In images printed by digital printers, what the human eye sees as a picture element (pixel) is actually a space on the page in which a certain number of dots are placed. The human eye then integrates these into a dot having a certain intensity. For monochromatic printing, this generally means that more dots mean a darker shade of gray on the spectrum between white, where no dots are printed, and black, when all possible dots within the pixel are printed. For color printing, the combination of the different colors of cyan, yellow and magenta (CMY) plus black (K), results in the color perceived by the human eye.

Digital print engines such as those used in multi-function peripherals, such as '4-in-1s' that print, copy, fax and scan, have particular difficulties with regard to manipulating the image data. These types of devices commonly receive 'mix mode' image data, data that is a combination of text, graphic and photographic data to be rendered into one image. The techniques for one type of data, such a photographic data, may not work well for text, etc. It becomes necessary to determine what type of data the system is processing to ensure proper rendering.

A continuous-tone scan image is usually processed and converted to a binary image before sending to a printer engine or being faxed with an image path. Due to limitations, post-processing in binary halftone domain is a common practice for printlcopy image quality improvement. For example, one may want to improve the uniformity of halftone dot distribution in smooth tone area, while avoiding degradation in sharp edge definition such as blurring or color fringing. In multi-function printer copy application, we may want to enhance black/white text edge by replacing residual color dots with black dots around the edge, while avoiding the side effects on abrupt color de-saturation in photographic data.

One method to ensure proper post-processing of the mixed-content binary image data is edge detection. Conventional edge detection algorithms often operate on local gradient calculations. Different gradient operators and complicated logic combination are applied to the data to detect edges with different orientations. This adds computation to the process.

In addition, gradient operators are not necessarily effective for dispersed-dot binary halftone images. A common dispersed-dot binary halftone image is comprised of image data to which error diffusion has been applied. In binary printing the result is either a 0, no dot printed, or a 1, a dot printed. Depending upon the value of the actual image data at that point, this may result in an error. For example, a printing system using 256 shades of gray, a dot being printed has a value of 255. The actual image data for that pixel may be 200, resulting in an error value of 55. This error value is filtered then diffused out to the neighboring pixels to maintain the local gray level. This may cause the dots to scatter or disperse around the edges, which makes edge detection more difficult. Besides, the currently well-known regular binary halftone patterns at mid-tone, may result in erroneous edge detection with gradient-based methods.

EP 0 771 102 A2 describes macrodetector based image conversion. An image detection and pixel processing system includes a plurality of detector elements for receiving an image. The detector elements are subdivided into a plurality of macrodetectors, with each macrodetector constituting four or more detector elements, and with each macrodetector providing information for determining both a total light intensity value within the macrodetector and a centroid of light intensity indicative of light intensity position within the macrodetector. An image processing assembly receives information from the plurality of macrodetectors, with the image processing assembly relating a pixel and its encompassed subpixel area to each corresponding macrodetector, and further determining the total light intensity within the pixel and the centroid of light intensity within the subpixel.. The image processing assembly is capable of rendering each subpixel area as an edge when magnitude of the centroid of light intensity is greater than a predetermined threshold.

SUMMARY OF THE INVENTION

It is the object of the present invention to improve digital image processing, particularly with regard to improved edge handling. This object is achieved by providing a method of edge detection according to claim 1, an imaging system according to claim 9 and an article of computer-readable media according to claim 10. Embodiments of the invention are set forth in the dependent claims.

**BRIEF DESCRIPTION OF THE DRAWINGS**

Figure 1 is an embodiment of an imaging system.

Figure 2 is an embodiment of a post processing module in an imaging system.

Figure 3 is an embodiment of a local window.

Figure 4 is an alternative embodiment of a local window.

Figure 5 is a graphical representation of centroids in a local window

Figure 6 is a data representation of a local window.

Figure 7 is an embodiment of a method of performing edge detection.
Figure 8 is an alternative embodiment of a method of performing edge detection.

## DETAILED DESCRIPTION

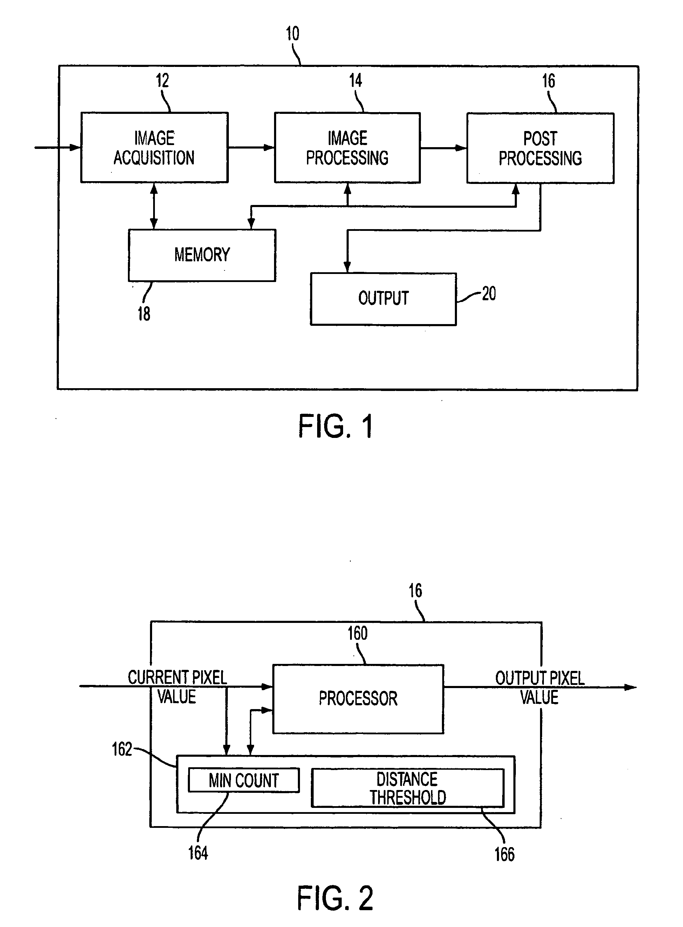

Figure 1 shows an embodiment ofan imaging system 10. The imaging system has an image acquisition engine 12 that acquires data representative of an image. This engine could be a scanner, such as would be on a copy or fax machine. The image data would be acquired by the scanning of a pre-existing document to capture the image data. The scanning may be from a glass platen, such as from a copy machine, or a light bar, such as from a fax machine.
In addition to, or in the alternative of, a scanning platen or light bar, the image may be acquired by from a host computer upon which a user has created an original document. This host computer may be directly connected to the device holding the print system, or it may access the device from a data network. In addition, the image acquisition may be from an incoming fax, at a fax receiver across a telephone line. However acquired, the image acquisition engine receives the image data.
The acquired image data is then routed to an image processing module 14. Image processing takes the acquired image values and performs the necessary processing to allow the data to be sent to an output engine for rendering. This may involved color space conversion, such as when the image acquisition engine acquires the image data in the Red-Green-Blue (RGB) color space, and the output engine functions in the Cyan-Yellow-Magenta-Black (CMYK) color space.
After the image data is prepared to be rendered, post processing may occur in the post processing module 16, for example residing 'within' the image processing module. It may be a dedicated portion of the image processor, a process running on the processor, etc. It is in this module, generally, that image enhancements are made. For example, the post processing module may handle halftoning artifacts created by the image processing system. It is generally in the post processing module that the binary edge detection process may be performed.
After post processing, the refined image data in the form of pixel values is sent to the output engine 20. During this process, the data may be temporarily stored in various stages during the processing in the memory 18. As will be discussed further, the memory may contain look-up tables and/or registers.
The output engine 20 may be one of several different engines capable of rendering an image from the image data. In one embodiment the output engine is a print engine that renders the image onto paper or other printing substrate via ink, dyes or toner. One such example of a print engine is an electrophotographic print engine, also known as a xerographic print engine. Other examples of output engines could be graphics adapters, such as when faxes are converted to electronic mail and routed from a fax server to a user's desktop as images, or the output engine could write the data to a file.
As mentioned above, edge detection in the image data allows the output engine to compensate for edges to avoid objectionable artifacts. During the error diffusion process, dots may be scattered throughout the image, which may result in edges being blurred or having color fringes around an otherwise black and white line. The post processing module, and the other modules in the system, may actually be a process running on the same processor as the other module. However, for ease of understanding, the post processing module 16 is shown in more detail in Figure 2.
The post processing module receives the current pixel value or values from the image processing module. The post processing module may also receive the image data directly. The processor 160 analyzes the data to determine if the pixel may lie on an edge. The current pixel value may be stored immediately upon receipt in memory 162. In addition, memory 162 may also store a minimum count in a register or other memory structure 164, and a distance threshold in a memory structure 166. These structures may be separated within the post processing module or located elsewhere in the system. The example given here is merely for ease of understanding.
The resulting output pixel value will depend upon whether the pixel has been designated as an edge pixel or not. The post processing module may alter the value of the pixel depending upon the designation. The actual alteration of the pixel value is beyond the scope of this disclosure and is only mentioned for completeness.
Further, the discussion up to here has mentioned pixel values. As will be discussed later, pixel values may be used in the analysis, but the entity under analysis may be pixels or sub-blocks of the image. The entity under analysis may be referred to as an image element. The sub-block may be any region defined by the system designer to be used in edge detection. For ease of discussion, the entity under analysis will be a pixel. A local window around the pixel will be defined. The window could have any number of elements desired. In the examples give, the window will be 5 x 5.

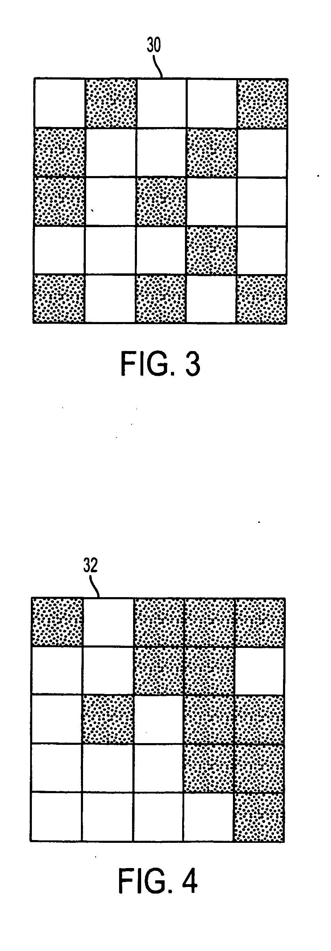

The entity under consideration would be the center pixel. An example of such a window is shown in Figure 3.

The window 30 has 25 pixels, with 0 data being shown as white, as no dot is printed, and 1 data being shown as black. In many printing systems, a 0 value corresponds to white and a 1 corresponds to black, but 'negative' printing with the opposite relationship is also possible within the scope of this disclosure. The window 30 of Figure 3 has a fairly even spread of white and black pixels. Note that the term 'white pixel' is used, even though white is really the absence of any affirmative color being applied to the paper. Similarly, the discussion here uses white and black for simplicity in understanding, the extension to colors will be discussed in more detail later.

In contrast with window 30, window 32 of Figure 4 has a polarized spread of white and black. The lower left corner is mostly white, while the upper right corner is mostly black. This polarization of colors may be exploited for edge detection purposes. If one were to take the centroid of the white region and the centroid of the black region, these centroids will more than likely be offset from each other some distance.

The geometric centroids can be found in many different ways. For example, assume a window of NxN. One can denote the binary pixel set inside the window as $B = \{b(i,j), i=1, 2...N; j=1, 2... N\}$. In this example, $b(i,j)=1$ for black and 0 for white. The black pixel set can then be defined as $P_k = \{b(i,j):b(i,j)=1\}$. The white pixel set can then be defined as $P_w = B - P_k$. The geometric centroid of the black pixel set, denoted as $C_k$, can be located by $(x_k,y_k) = (\text{mean}(i_k), \text{mean}(j_k))$, where the black pixels are elements of the window pixel set P and $i_k$, $j_k$ are the row and column numbers of the black pixels. The geometric centroid of the white pixel set, denoted as $C_w$, can be located by $(x_w,y_W) = (\text{mean}(i_w), \text{mean}(j_W))$, where the white pixels are elements of the window pixel set P and $i_k$, $j_k$ are the row and column numbers of the white pixels.

One may use a distance function satisfying distance axioms to quantify the distance between the two centroids. The city block' distance of x over and y up or down seems to provide the desired computational ease, although other distance such as the Euclidean distance may be used as well. The 'city block' distance may be defined as $D_c = |x_w - x_k| + |y_w - y_k|$.

For the window as seen in Figure 4, the values of the pixels shown in a local coordinate system from 1,1 to 5,5 are as follows:

$$(1,1)=1, (1,2) = 1, (1,3)=1, (1,4)=1, (1,5)=1$$

$$(2,1)=0, (2,2) = 0, (2,3)=1, (2,4)=1, (2,5)=1$$

$$(3,1)=0, (3,2) = 1, (3,3)=0, (3,4)=1, (3,5)=1$$

$$(4,1)=0, (4,2) = 0, (4,3)=0, (4,4)=1, (4,5)=1$$

$$(5,1)=0, (5,2) = 0, (5,3)=0, (5,4)=0, (5,5)=1.$$

The black and white pixel sets then are:

| Black | | White | |
|---|---|---|---|
| I | j | i | J |
| 1 | 1 | 2 | 1 |
| 1 | 2 | 2 | 2 |
| 1 | 3 | 3 | 1 |
| 1 | 4 | 3 | 3 |

(continued)

| Black | | White | |
|---|---|---|---|
| I | j | i | J |
| 1 | 5 | 4 | 1 |
| 2 | 3 | 4 | 2 |
| 2 | 4 | 4 | 3 |
| 2 | 5 | 5 | 1 |
| 3 | 2 | 5 | 2 |
| 3 | 4 | 5 | 3 |
| 3 | 5 | 5 | 4 |
| 4 | 4 | | |
| 4 | 5 | | |
| 5 | 5 | | |
| 33 | 52 | 42 | 23 |

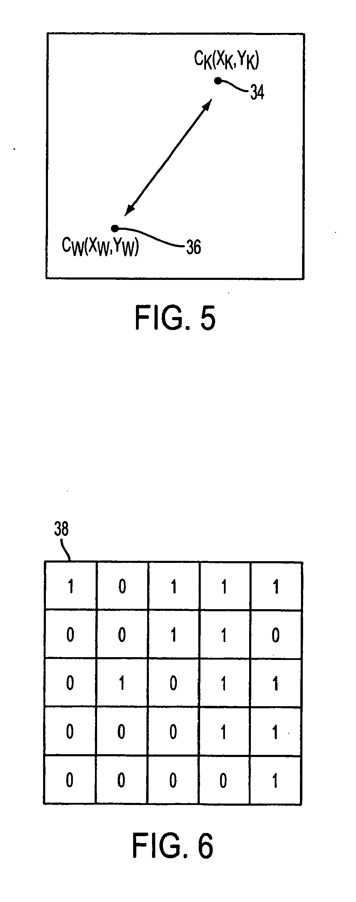

In this example there are 14 black pixels, so the mean($i_k$) is 33/14 or 2.3, and the mean($j_k$) = 52/14 or 3.71. The mean($i_w$) is 42/11 or 3.81, and the mean($j_w$) = 23/11 or 2.09. These positions are shown in Figure 5.

One possible implementation is to use the 'word' created from the data values in the window as an index to a look-up table to allow the centroids to be determined. For example, the data 'word' for the image of Figure 4 can be translated into Is and Os as seen in Figure 6. This word would then be 1111100111010110001100001. This would then be used to index a look-up table in which is stored the black centroid, the white centroid or both. It may be possible to determine an edge by calculating the black centroid and comparing it to the location of a centroid for the whole window. The window centroid is (3,3) for a 5x5 window. If the distance between the black centroid and the window centroid is above a threshold, the process will identify the pixel as an edge pixel.

This same process may be expanded to include color edges. For example, if one color is a distance away from the other centroids of the other colors, this may indicate that there is an edge occurring in that color. For example, if there is a yellow character being printed on a background that is a mix of cyan, yellow and magenta, the yellow centroid will be offset from the centroids of the other colors because there is a region that is just yellow. This shifts the centroid towards the yellow region spatially, causing the yellow centroid to be at least a threshold distance away from the other color centroids.

One problem may arise in areas of highlight and shadows. These areas may have only a few black pixels or white pixels in a small local window. This may result in instability for the centroid position estimate and therefore mis-classification of an image element. One way to deal with this issue may be to use a minimum image element count for black and white image elements, or for the color image elements. In the example give above, there would be a minimum black and white pixel count for the window. If the counts of pixels of less than two colors are below a threshold, the pixel would be classified as a non-edge pixel.

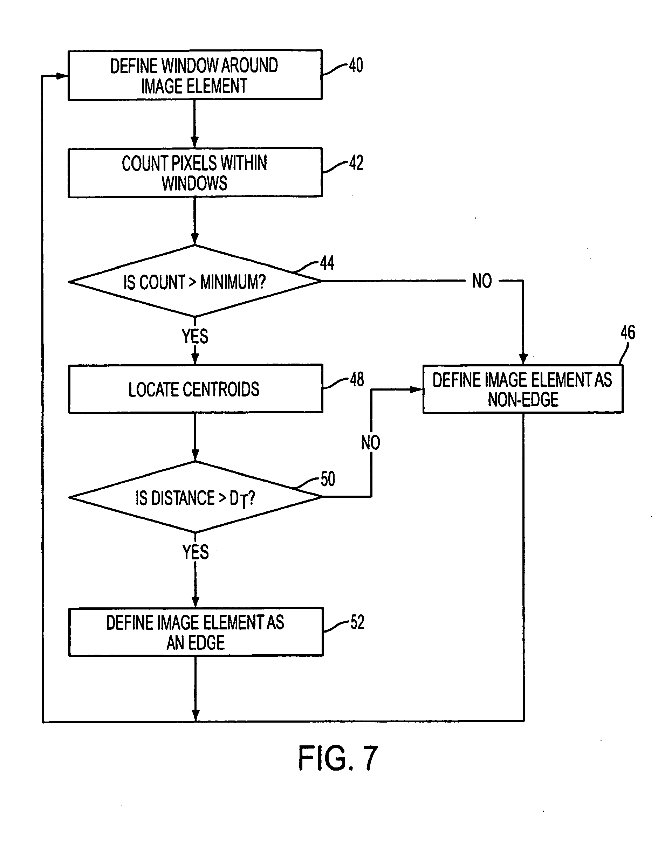

If the minimum count is satisfied and the distance is greater than a threshold distance, the image element may be classified as an edge element. An embodiment of an overall process for this determination is shown in Figure 7. The window size around the image element is defined at 40. In the above example, the window size was 5x5 and the image elements were pixels. The window size and whether pixels, sub-blocks or other segments of the image are used is left up to the system designer. These selections may be based upon the dots per inch of the print engine, the resolution of the original image, the transfer function of the scanner, etc.

At 42, the number of pixels is counted within the window. Note that even if the image elements are sub-blocks or other segments, the number of pixels will be that which determines if the region is highlight, shadow or other type of region that generally does not have enough pixels to allow a stable centroid to be calculated. If the count is below the minimum at 44, the element is defined as a non-edge element at 46. If the count is above a minimum at 44, the centroids are located at 48. The distance between the centroids is also determined. At 50, the distance between the centroids is compared to the threshold distance $D_t$. If the distance between the thresholds is greater than the threshold distance at 50, the element is defined as an edge element at 52. If the distance is less than the threshold distance at 50, the image element is defined as a non-edge element at 46. Upon completion of the process for the current element, the window then 'slides' to surround the next element and the process is repeated.

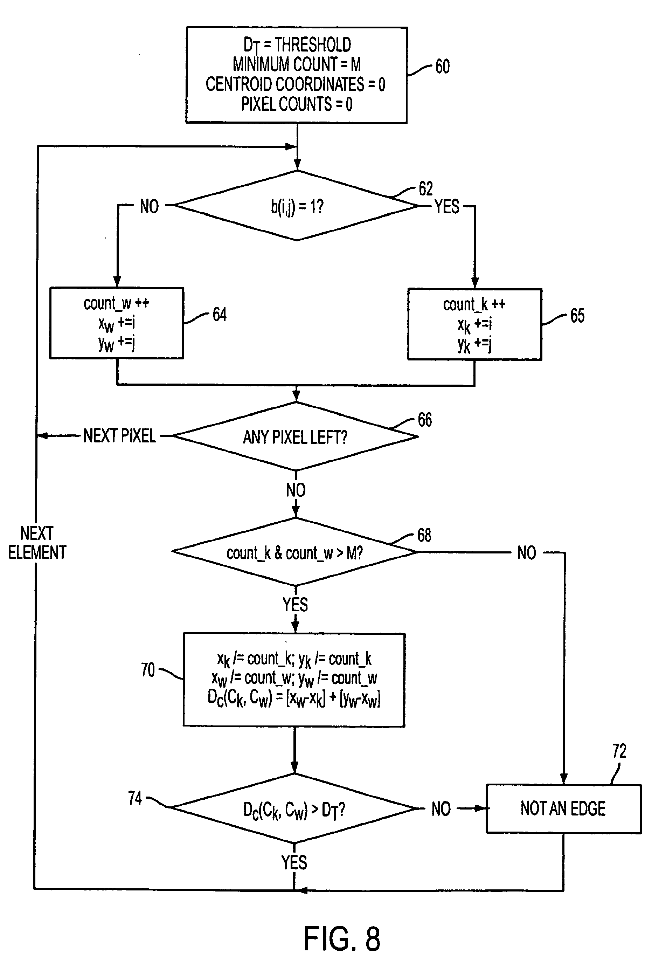

Figure 8 shows a specific embodiment of a process to classify an element as edge or non-edge in accordance with the example given above, where the image elements are pixels and the window is a 5x5 region of pixels. For illustration purposes only, black and white are used in this example. The variable $D_t$ is initialized with the threshold distance, the variable M is initialized with the minimum count. The centroid coordinates are set to zero and the pixel coordinates (i,j) are set to zero, at 60. At 62, a determination is made whether or not the pixel is a black pixel (1) or a white pixel (0). If the pixel is a black pixel, the count_k is incremented and the sum of the black coordinates for i and j are increased by the current values of i and j. If the pixel is a white pixel, this process is performed for the white count count_w, and the sum of the white coordinates at 64.

At 66, the process is repeated until there are no more pixels left in the window. After the last pixel in the window is counted, the counts are compared to the minimum count at 68. If the pixel counts are below the minimum, the pixel is classified as a non-edge pixel at 72, the window slides to the next pixel and the process begins again.

If the pixel counts are above the minimum, the means of the coordinates for black and white are calculated to determine the centroid and the distance between them is determined at 70. At 74, if the distance is above the threshold, the pixel is identified as an edge pixel, the window slides to the next pixel and the process returns to 60. If the distance is not above the threshold, the pixel is identified as a non-edge pixel at 72 and the process returns to 60. This process shown in Figure 8 is a more detailed embodiment of the general process as shown in Figure 7.

The variations on the embodiments, as discussed above, may include different colors, different image elements, and different centroids. Generally, however, two centroids will be calculated for each color plane. In one embodiment, the centroids are the black and white centroids. In another, the centroids are the black and window centroids. For color applications, the centroids may be any combination believed to provide the most accurate edge detection.

The post-processing module performing these methods may be implemented in a multi-function peripheral, also know as a '4-in-1' printer, copier, scanner and fax machine, or other imaging and/or printing device. The methods and components may be included in the firmware or logic of an application specific integrated circuit (ASIC), field programmable gate array (FPGA), or in a processor. In some embodiments, an article of computer-readable code may include the instructions, that when executed, cause the computer, in this case the imaging system, to perform the methods set out above. The article may be used to upgrade the operating software/firmware on an existing imaging system.

**Claims**

1. A method of edge detection, comprising:

   Defining (40) a local window (30,32) around a current image element;
   Counting (42) at least one set of pixels inside the window (30,32);
   Determining (44) if a number of pixels within the set of pixels is above a threshold;
   if the number of pixels is above the threshold, locating (48) at least two geometric centroids (34,36) associated with the window;
   determining (50) if a distance between the two geometric centroids (34,36) is larger than a threshold distance; and
   if the distance between the two geometric centroids (34,36) is larger than the threshold distance, defining (52) the current image element as an edge element

2. The method of claim 1, further comprising designating the current image element as a non-edge element if the number of pixels is below a threshold for every color plane.

3. The method of claim 1, further comprising designating the current image element as a non-edge element if the distance between the two geometric centroids (34,36) is less than or equal to the threshold distance.

4. The method of claim 1, defining a local window around a current image element further comprising defining a local window around a current pixel.

5. The method of claim 1, defining a local window around a current image element further comprising defining a local window around a current sub-block.

6. The method of claim 1, defining a local window further comprising defining a window of five pixels by five pixels.

7. The method of claim 1, counting at least one set of pixels further comprising counting a set of black pixels and a set of white pixels.

8. The method of claim 1, locating at least two geometric centroids (34,36) further comprising locating a black centroid and a white centroid.

9. An imaging system, comprising:

an image acquisition engine (12) to acquire image data representative of an input image;
an image processing module (14) to process the image data; and
a post processing module (16) to:

determine if a minimum number of pixels exist in a window (30,32) around a current image element;
determine at least two geometric centroids (34,36) for the window if the minimum number of pixels exist;
find a distance between the geometric centroids (34,36); and
if the distance between the geometric centroids (34,36) is higher than a threshold, designating the current image element as an edge element.

10. An article of computer-readable media containing instructions that, when executed, cause the machine to:

define a local window (30, 32) around a current image element; count at least one set of pixels inside the window (30, 32);
determine if a number of pixels within the set of pixels is above a threshold;
if the number of pixels is above the threshold, locate at least two geometric centroids (34,36) associated with the window (30, 32);
determine if a distance between the two geometric centroids (34,36) is larger than a threshold distance; and
if the distance between the two geometric centroids (34,36) is larger than the threshold distance, define the current image element as an edge element

**Patentansprüche**

1. Verfahren zur Randerkennung, umfassend:

Definieren (40) eines lokalen Fensters (30, 32) um ein aktuelles Bildelement herum;
Zählen (42) von wenigstens einer Menge von Pixeln innerhalb des Fensters (30, 32);
Bestimmen (44), ob eine Anzahl von Pixeln innerhalb der Menge von Pixeln über einer Schwelle ist;
für den Fall, dass die Anzahl von Pixeln über der Schwelle ist, erfolgendes Ausfindigmachen (48) von wenigstens zwei geometrischen Schwerpunkten (34, 36), die zu dem Fenster gehören;
Bestimmen (50), ob ein Abstand zwischen den zwei geometrischen Schwerpunkten (34, 36) größer als ein Schwellenabstand ist; und
für den Fall, dass der Abstand zwischen den zwei geometrischen Schwerpunkten (34, 36) größer als der Schwellenabstand ist, erfolgendes Definieren (52) des aktuellen Bildelementes als Randelement.

2. Verfahren nach Anspruch 1, des Weiteren umfassend ein Bezeichnen des aktuellen Bildelementes als Nichtrandelement, wenn die Anzahl von Pixeln unter einer Schwelle für jede Farbebene ist.

3. Verfahren nach Anspruch 1, des Weiteren umfassend ein Bezeichnen des aktuellen Bildelementes als Nichtrandelement, wenn der Abstand zwischen den zwei geometrischen Schwerpunkten (34, 36) kleiner oder gleich dem Schwellenabstand ist.

4. Verfahren nach Anspruch 1, wobei das Definieren eines lokalen Fensters um ein aktuelles Bildelement herum des Weiteren ein Definieren eines lokalen Fensters um ein aktuelles Pixel herum umfasst.

5. Verfahren nach Anspruch 1, wobei das Definieren eines lokalen Fensters um ein aktuelles Bildelement herum des Weiteren ein Definieren eines lokalen Fensters um einen aktuellen Unterblock herum umfasst.

6. Verfahren nach Anspruch 1, wobei das Definieren eines lokalen Fensters des Weiteren ein Definieren eines Fensters von 5 Pixeln mal 5 Pixeln umfasst.

7. Verfahren nach Anspruch 1, wobei das Zählen von wenigstens einer Menge von Pixeln des Weiteren ein Zählen einer Menge von schwarzen Pixeln und einer Menge von weißen Pixeln umfasst.

8. Verfahren nach Anspruch 1, wobei das Ausfindigmachen von wenigstens zwei geometrischen Schwerpunkten (34, 36) des Weiteren ein Ausfindigmachen eines schwarzen Schwerpunktes und eines weißen Schwerpunktes umfasst.

9. Abbildungssystem, umfassend:

einen Bilderwerbsmechanismus (12) zum Erwerben von Bilddaten, die ein Eingabebild darstellen;
ein Bildverarbeitungsmodul (14) zum Verarbeiten der Bilddaten; und
ein Nachverarbeitungsmodul (16):

zum Bestimmen, ob eine Minimalanzahl von Pixeln in einem Fenster (30, 32) um ein aktuelles Bildelement herum vorhanden ist;
Bestimmen von wenigstens zwei geometrischen Schwerpunkten (34, 36) für das Fenster, wenn die Minimalanzahl von Pixeln vorhanden ist;
Ermitteln eines Abstandes zwischen den geometrischen Schwerpunkten (34, 36); und
für den Fall, dass der Abstand zwischen den geometrischen Schwerpunkten (34, 36) größer als eine Schwelle ist, erfolgendes Festlegen des aktuellen Bildelementes als Randelement.

10. Erzeugnis von computerlesbaren Medien, das Anweisungen enthält, die bei Ausführung das Gerät veranlassen zum:

Definieren eines lokalen Fensters (30, 32) um ein aktuelles Bildelement herum;
Zählen von wenigstens einer Menge von Pixeln innerhalb des Fensters (30, 32);
Bestimmen, ob eine Anzahl von Pixeln innerhalb der Menge von Pixeln über einer Schwelle ist;
für den Fall, dass die Anzahl von Pixeln über der Schwelle ist, erfolgendes Ausfindigmachen von wenigstens zwei geometrischen Schwerpunkten (34, 36), die zu dem Fenster (30, 32) gehören;
Bestimmen, ob ein Abstand zwischen den zwei geometrischen Schwerpunkten (34, 36) größer als ein Schwellenabstand ist; und
für den Fall, dass der Abstand zwischen den zwei geometrischen Schwerpunkten (34, 36) größer als der Schwellenabstand ist, erfolgendes Definieren des aktuellen Bildelementes als Randelement.

**Revendications**

1. Procédé de détection de bords, comprenant le fait de:

définir (40) une fenêtre locale (30, 32) autour d'un élément d'image actuel;
compter (42) au moins un ensemble de pixels à l'intérieur de la fenêtre (30, 32);
déterminer (44) si un nombre de pixels dans l'ensemble de pixels est supérieur à un seuil;
si le nombre de pixels est supérieur au seuil, situer (48) au moins deux centroïdes géométriques (34, 36) associés à la fenêtre;
déterminer (50) si une distance entre les deux centroïdes géométriques (34, 36) est plus grande qu'une distance seuil, et
si la distance entre les deux centroïdes géométriques (34, 36) est plus grande que la distance seuil, définir (52) l'élément d'image actuel en tant qu'élément de bord.

2. Procédé de la revendication 1, comprenant en plus le fait de désigner l'élément d'image actuel en tant qu'élément n'appartenant pas au bord si le nombre de pixels est inférieur à un seuil pour chaque plan de couleur.

3. Procédé de la revendication 1, comprenant en plus le fait de désigner l'élément d'image actuel en tant qu'élément n'appartenant pas au bord si la distance entre les deux centroïdes géométriques (34, 36) est inférieure ou égale à la distance seuil.

4. Procédé de la revendication 1, définissant une fenêtre locale autour d'un élément d'image actuel comprenant en plus le fait de définir une fenêtre locale autour d'un pixel actuel.

5. Procédé de la revendication 1, définissant une fenêtre locale autour d'un élément d'image actuel comprenant en plus le fait de définir une fenêtre locale autour d'un sous-bloc actuel.

**6.** Procédé de la revendication 1, définissant une fenêtre locale comprenant en plus le fait de définir une fenêtre de cinq pixels par cinq pixels.

**7.** Procédé de la revendication 1, comptant au moins un ensemble de pixels comprenant en plus le fait de compter un ensemble de pixels noirs et un ensemble de pixels blancs.

**8.** Procédé de la revendication 1, situant au moins deux centroïdes géométriques (34, 36) comprenant en plus le fait de situer un centroïde noir et un centroïde blanc.

**9.** Système d'imagerie, comprenant:

un moteur (12) d'acquisition d'images pour acquérir des données d'image représentant une image d'entrée;
un module (14) de traitement d'images pour traiter les données d'image; et
un module (16) de post-traitement destiné à:

déterminer si un nombre minimal de pixels existe dans une fenêtre (30, 32) autour d'un élément d'image actuel;
déterminer au moins deux centroïdes géométriques (34, 36) pour la fenêtre si le nombre minimal de pixels existe;
trouver une distance entre les centroïdes géométriques (34, 36); et
si la distance entre les centroïdes géométriques (34, 36) est supérieure à un seuil, désigner l'élément d'image actuel en tant qu'élément de bord.

**10.** Article de supports lisibles par un ordinateur contenant des instructions qui, lorsqu'elles sont exécutées, amènent la machine à:

définir une fenêtre locale (30, 32) autour d'un élément d'image actuel;
compter au moins un ensemble de pixels à l'intérieur de la fenêtre (30, 32);
déterminer si un nombre de pixels dans l'ensemble de pixels est supérieur à un seuil;
si le nombre de pixels est supérieur au seuil, situer au moins deux centroïdes géométriques (34, 36) associés à la fenêtre (30, 32);
déterminer si une distance entre les deux centroïdes géométriques (34, 36) est supérieure à une distance seuil, et
si la distance entre les deux centroïdes géométriques (34, 36) est supérieure à la distance seuil, définir l'élément d'image actuel en tant qu'élément de bord.

10

FIG. 1

FIG. 2

FIG. 3

FIG. 4

FIG. 5

FIG. 6

FIG. 7

**FIG. 8**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0771102 A2